# FASCICULE DE BREVET EUROPEEN

(11) **EP 0 320 358 B1**
(45) Date de publication et mention de la délivrance du brevet: **01.12.1993**
(21) Numéro de dépôt: 88403073.5
(22) Date de dépôt: 05.12.1988
(51) Int. Cl.: H02G 13/00

(54) **Perfectionnements aux dispositifs de protection contre la foudre**
Blitzschutzeinrichtungen
Lightning protection

(30) Priorité: 07.12.1987 FR 8716985
(43) Date de publication de la demande: 14.06.1989
(73) Titulaire: Lewiner, Jacques, F-92210 Saint-Cloud (FR); Hennion, Claude, F-75013 Paris (FR); Smycz, Eugeniusz, F-92210 Saint-Cloud (FR)
(72) Inventeur: Lewiner, Jacques, F-92210 Saint-Cloud (FR); Hennion, Claude, F-75013 Paris (FR); Smycz, Eugeniusz, F-92210 Saint-Cloud (FR)
(74) Mandataire: Behaghel, Pierre

(56) Documents cités:
- EP-A- 0 228 321
- FR-A- 907 037

## Description

Pour protéger les édifices contre la foudre, on connaît les paratonnerres, appareils composés d'une pointe ou tige métallique dressée verticalement sur le faîte des édifices à protéger et reliée au sol.

Pour accroître l'efficacité de ces appareils, il a été proposé de leur faire émettre des ions par temps d'orage, ce qui renforce leur pouvoir attractif de la foudre en créant dans l'espace aérien des chemins privilégiés pour celle-ci.

Pour écarter l'obligation de prévoir une alimentation électrique spéciale pour ces émetteurs d'ions, il a déjà été prévu de placer une source radioactive au voisinage de la tige, mais une telle formule présente l'inconvénient de disséminer dans la nature des sources potentiellement dangereuses.

Dans le même but, il a été également prévu de produire les ions par décharge électrique d'éléments piézo-électriques sollicités mécaniquement par les vents d'orage, mais ces éléments et leurs supports sont fragiles et onéreux et leur fonctionnement suppose que soufflent des vents suffisamment forts.

Encore dans le but indiqué, il a été prévu d'assurer l'alimentation électrique des émetteurs d'ions à partir du potentiel électrostatique naturellement créé lors des orages entre le sol et les nuages, en ayant recours à cet effet à des organes de prise de potentiel atmosphérique. Ces organes sont encombrants et peu esthétiques, voir par exemple le dispositif du document EP-A1-0 228 321).

L'invention a également pour but de supprimer au moins en partie le recours à une source d'alimentation électrique permanente pour l'émission des ions, et à cet effet d'exploiter l'un des phénomènes qui se manifestent naturellement par temps d'orage.

Le phénomène ici exploité est l'émission d'ondes électromagnétiques à fréquence élevée par les "traceurs" ionisés qui sont eux-mêmes formés dans les nuages ou près du sol et qui sont habiles à acheminer la foudre.

Les demandeurs ont en effet réalisé que ces ondes, qui se propagent à la vitesse de la lumière, parvenaient au niveau de l'appareil de protection bien avant les traceurs émetteurs eux-mêmes, lesquels se présentent sous la forme de plasmas se propageant à environ 10⁵ m/s [100 km par seconde], et suffisamment en avance pour que leur exploitation immédiate puisse se traduire par l'émission ionique désirée en temps voulu, c'est-à-dire juste avant la chute de la foudre acheminée par lesdits traceurs à proximité de l'appareil.

Pour exploiter cette observation, les appareils de protection contre la foudre selon l'invention comprennent encore des moyens pour provoquer des émissions d'ions à proximité immédiate d'une pointe métallique ou analogue reliée à la terre et ils sont essentiellement caractérisés en ce qu'ils comportent en outre une sonde propre à détecter les ondes électromagnétiques de fréquence supérieure à 100 kHz émises par les traceurs, et à transformer ces ondes en la haute tension nécessitée par l'émission ionique.

Dans des modes de réalisation préférés, on a recours en outre à l'une et/ou à l'autre des dispositions suivantes :
- la sonde comprend comme organe d'entrée une bobine présentant un grand nombre de spires, nombre compris notamment entre 5000 et 20.000, enroulées autour d'un noyau de perméabilité magnétique élevée, savoir de préférence supérieure à 500,
- la sonde comprend comme organe d'entrée un condensateur à électrodes parallèles et rapprochées dont la capacité est supérieure à 50 pF,
- l'organe d'entrée de la sonde est directement raccordé à une électrode de décharge propre à engendrer des ions au voisinage de la pointe dés qu'elle est alimentée en une haute tension, notamment supérieure à 3 kV,
- la sonde comprend, comme organe d'entrée, une bobine présentant un nombre de spires compris entre 50 et 500, spires enroulées autour d'un noyau de perméabilité magnétique élevée, savoir de préférence supérieure à 500, et successivement, après son organe d'entrée, un condensateur monté en dérivation sur cet organe de façon à être chargé par la sortie de celui-ci à travers un redresseur, un comparateur agencé de façon à délivrer une tension continue U dès que la tension V développée aux bornes du condensateur dépasse un seuil prédéterminé Vₛ, un oscillateur déclenché par la tension U, un interrupteur électronique excité par la sortie de cet oscillateur et monté en série avec le primaire d'un autotransformateur, et une électrode de décharge montée en série avec le secondaire de l'autotransformateur, électrode de décharge propre à engendrer des ions au voisinage de la pointe dès qu'elle est alimentée en une haute tension, notamment supérieure à 3 kV,
- dans la sonde selon l'alinéa précèdent, l'oscillateur est alimenté par la tension V,
- dans la sonde selon l'alinéa qui précède le précédent, l'oscillateur est alimenté par une source électrique permanente.

L'invention comprend, mises à part ces dispositions principales, certaines autres dispositions qui s'utilisent de préférence en même temps et dont il sera plus explicitement question ci-après.

Dans ce qui suit, l'on va décrire plusieurs modes de réalisation de l'invention en se référant au dessin ci-annexé d'une manière bien entendu non limitative.

La figure 1, de ce dessin, illustre le principe de fonctionnement d'un appareil de protection contre la foudre conforme à l'invention.

La figure 2 est le schéma d'un premier mode de réalisation d'un tel appareil.

La figure 3 est le schéma d'un second mode de réalisation d'un tel appareil.

La figure 4 montre la forme des tensions développées respectivement en plusieurs points de l'appareil schématisé sur la figure 3.

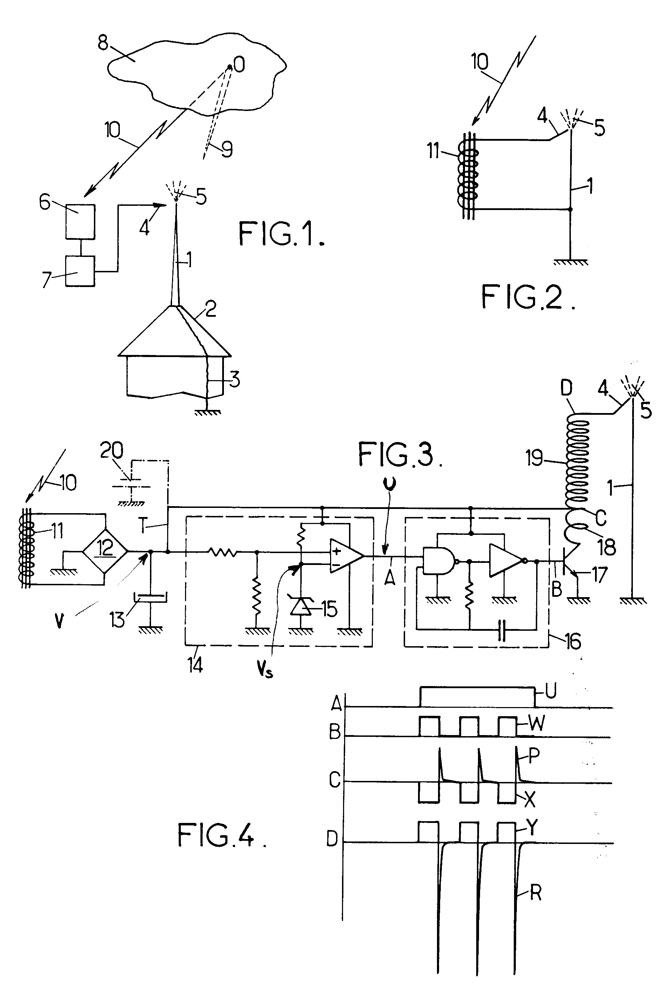

Sur la figure 1 on voit une pointe métallique 1 dressée verticalement à partir du faîte d'un édifice 2 et reliée à la terre par un conducteur 3.

A proximité de l'extrémité de la pointe 1 se trouve une électrode de décharge 4 propre à engendrer des ions 5 lorsqu'elle est alimentée par une tension élevée, généralement supérieure à 3 kV.

Cette électrode de décharge 4 est elle-même reliée à une sonde 6 par l'intermédiaire d'un circuit 7 de liaison et/ou de traitement sur lequel on reviendra plus loin.

Les nuages qui se forment au-dessus de l'édifice 2 par temps d'orage sont visibles en 8.

Lorsqu'il se produit des décharges électriques en un point 0 de ces nuages 8, on peut considérer en première approximation que ces décharges se traduisent par la création d'un traceur 9 se présentant sous la forme d'un plasma de particules ionisées émettant un rayonnement électromagnétique intense dans une très large gamme de fréquences (comprise entre 1 kHz et 100 MHz) et se propageant à une vitesse relativement faible, en moyenne de l'ordre de 10⁵ m/s [100 km par seconde], le rayonnement ou onde électromagnétique 10 à haute fréquence émis par le traceur se propageant quant à lui à la vitesse de la lumière (environ 300.000 km par seconde).

Vu ces différences de vitesse, l'onde en question parvient à la sonde 6 avant que le traceur ait pu 1 atteindre : c'est ainsi que, si le point 0 est situé à 1000 m de la sonde 6, le délai entre les arrivées successives de l'onde et du traceur au niveau de la sonde est de l'ordre de 10 ms.

Il existe donc à ce niveau un délai non négligeable entre l'instant où l'arrivée de la foudre est annoncée et l'instant de cette arrivée effective.

C'est ce délai qui est exploité conformément à l'invention pour provoquer immédiatement l'émission des ions susceptibles d'aiguiller correctement la foudre vers la pointe 1 lorsqu'elle parvient à proximité de cette pointe.

A cet effet les ondes électromagnétiques 10, de fréquence supérieure à 100 kHz, sont détectées et exploitées pour engendrer la haute tension nécessaire à l'émission des ions.

L'appareil ou "sonde" destiné à cette exploitation comprend une "antenne" ou organe d'entrée 11 sensible aux ondes indiquées, lesquelles engendrent un champ électromagnétique à haute fréquence correspondant à des tensions électriques de l'ordre de quelques volts.

Cet organe d'entrée 11 est notamment une bobine comprenant un grand nombre de spires enroulées autour d'un noyau à perméabilité magnétique élevée.

Le nombre des spires est de préférence compris entre 5000 et 20.000, étant par exemple de l'ordre de 10.000, alors que la perméabilité du noyau, dont la section droite est par exemple de l'ordre 10⁻⁴ m² (soit du cm²), est supérieure à 1000, ce noyau étant notamment constitué en ferrite.

Ledit organe d'entrée 11 pourrait également être constitué par un condensateur présentant deux électrodes parallèles et rapprochées l'une de l'autre, leur écartement étant notamment de l'ordre de 10⁻³ à 10⁻¹ m (soit de 1 à 100 mm), ce qui produit des capacités de l'ordre de 50 pF à 50 nF, de préférence de l'ordre de quelques nF.

Si l'énergie collectée par l'organe d'entrée 11 est suffisante pour engendrer une tension électrique supérieure à 3 kV, cet organe peut être directement branché sur l'électrode de décharge 4 comme il a été schématisé sur la figure 2.

Dans des modes de réalisation plus élaborés schématisés sur la figure 3, un circuit électronique 7 de traitement est interposé entre l'organe d'entrée 11 et l'électrode de décharge 4.

L organe d'entrée 11 est notamment une bobine présentant un nombre de spires compris entre 50 et 500, spires enroulées autour d'un noyau de perméabilité magnétique élevée, savoir de préférence supérieure à 500, et de section droite de l'ordre du cm², ce noyau étant notamment constitué en ferrite.

Le circuit 7 comprend successivement :
- un redresseur 12,
- un condensateur 13 monté en dérivation de façon à être chargé progressivement par la sortie de l'organe d'entrée 11 redressée en 12,
- un comparateur 14 dont une entrée est branchée aux bornes du condensateur 13, agencé de façon à comparer la tension V développée aux bornes de ce condensateur avec une tension de seuil Vₛ définie par une diode Zener 15,
- un oscillateur 16 relié à la sortie du comparateur 14,
- et un interrupteur électronique 17 excité par la sortie de l'oscillateur 16 et monté en série avec le primaire 18 d'un autotransformateur dont le secondaire 19 est branché sur l'électrode de décharge 4.

Le rapport de transformation de l'autotransformateur 18,19 est avantageusement compris entre 4 et 20, étant par exemple égal à 5.

Le fonctionnement de ce circuit est le suivant.

Dès que la tension V développée aux bornes du condensateur 13 dépasse le seuil Vₛ, le comparateur 14 délivre sur sa sortie A une tension continue U (voir figure 4) propre à déclencher l'oscillateur 16, lequel délivre alors sur sa sortie B un train d'impulsions de tension W à une fréquence F qui est par exemple de l'ordre de 10 kHz ou supérieure, chaque période correspondant alors à un déplacement de traceur de l'ordre de 10 m ou moins.

Ce train d'impulsions W commande alternativement l'ouverture et la fermeture de l'interrupteur 17, ce qui développe aux bornes du primaire 18 (point C sur la figure 3) un train d'impulsions X dont chacune présente un pic P.

A ces impulsions X correspondent aux bornes du secondaire 19 des impulsions de tension Y comportant chacune un pic R dont l'amplitude est très élevée : cette amplitude peut facilement atteindre ou même dépasser 10 kV et il correspond à la succession de ces pics une émission chronique d'ions 5 à l'extrémite de la pointe 1, au rythme de la fréquence F.

Dans le mode de réalisation schématisé sur la figure 3, la tension d'alimentation du circuit est directement prélevée sur le condensateur 13, lequel emmagasine en permanence l'énergie recueillie par l'antenne 11, énergie prélevée sur le rayonnement électromagnétique 10.

Selon une variante, la tension d'alimentation est engendrée par une source permanente telle que la pile 20 représentée en traits mixtes sur la figure 3 ; dans ce cas, il faut supprimer du schéma de ladite figure le tronçon de fil vertical désigné sur celle-ci par la référence T.

Les circuits électroniques du comparateur et de l'oscillateur 16 ont été représentés schématiquement sur la figure 3, mais ils n'ont pas été détaillés du fait qu'ils sont connus en eux-mêmes du technicien.

On notera toutefois que le schéma adopté pour l'oscillateur 16 correspond à une réalisation extrêmement simple, consommant très peu de courant, et susceptible d'être réalisée, tout comme le comparateur 14 d'ailleurs, à l'aide de composants semi-conducteurs du type C MOS.

En suite de quoi, et quel que soit le mode de réalisation adopté, on dispose finalement d'appareils de protection contre la foudre dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, telles qu'elles apparaissent dans les revendications ci-annexées.

## Revendications

1. Dispositif de protection contre la foudre, comprenant une pointe métallique (1) dressée verticalement et reliée à la terre et des moyens (4) pour provoquer des émissions d'ions (5) à proximité immédiate de la pointe, caractérisé en ce qu'il comporte une sonde (6,7) agencée de façon à détecter les ondes électromagnétiques (10) de fréquence supérieure à 100 kHz émises par des traceurs (9), et à transformer ces ondes en la haute tension nécessitée par l'émission ionique.

2. Dispositif de protection selon la revendication 1, caractérisé en ce que sa sonde (6,7) comprend comme organe d'entrée (11) une bobine présentant un nombre au moins égal à 50 de spires enroulées autour d'un noyau de perméabilité magnétique supérieure à 500.

3. Dispositif de protection selon la revendication 2, caractérisé en ce que la sonde comprend successivement, après son organe d'entrée (11), un condensateur (13) monté en dérivation sur cet organe de façon à être chargé par la sortie de celui-ci à travers un redresseur (12), un comparateur (14) agencé de façon à délivrer une tension continue (U) dès que la tension (V) développée aux bornes du condensateur (13) dépasse un seuil prédéterminé (Vₛ), un oscillateur (16) déclenché par la tension continue (U), un interrupteur électronique (17) excité par la sortie de cet oscillateur et monté en série avec le primaire (18) d'un autotransformateur, et une électrode de décharge (4) montée en série avec le secondaire (19) de l'autotransformateur, électrode de décharge agencée de façon à engendrer des ions au voisinage de la pointe (1) dès qu'elle est alimentée en haute tension.

4. Dispositif de protection selon la revendication 3, caractérisé en ce que l'oscillateur (16) est alimenté par la tension (V) développée aux bornes du condensateur (13).

5. Dispositif de protection selon l'une quelconque des revendications 1 et 2, caractérisé en ce que l'organe d'entrée (11) de la sonde est directement raccordé à une électrode de décharge (4) agencée de façon à engendrer des ions au voisinage de la pointe (1) dès qu'elle est alimentée en haute tension.

## Claims

1. Lightning protection device comprising a metal spike (1) erected vertically and connected to earth and means (4) for causing emissions of ions (5) in the immediate proximity of the spike, characterised in that it includes a sensor (6, 7) arranged so as to detect the electromagnetic waves (10) of a frequency higher than 100 kHz emitted by tracers (9) and transforming these waves into the high voltage necessitated by the ion emission.

2. Protection device according to Claim 1, characterised in that its sensor (6, 7) comprises, as an input device (11), a coil having a number of turns at least equal to 50 wound around a core with a magnetic permeability greater than 500.

3. Protection device according to Claim 2, characterised in that the sensor comprises successively, after its input device (11), a capacitor (13) mounted as a branch from this device so as to be charged by the output from it through a rectifier (12), a comparator (14) arranged so as to deliver a DC voltage (U) as soon as the voltage (V) developed at the terminals of the capacitor (13) exceeds a predetermined threshold (Vₛ), an oscillator (16) triggered by the DC voltage (U), an electronic switch (17) energised by the output from this oscillator and mounted in series with the primary winding (18) of an autotransformer, and a discharge electrode (4) mounted in series with the secondary winding (19) of the autotransformer, said discharge electrode being arranged so as to generate ions in the vicinity of the spike (1) as soon as it is fed at high voltage.

4. Protection device according to Claim 3, characterised in that the oscillator (16) is fed by the voltage (V) developed at the terminals of the capacitor (13).

5. Protection device according to either one of Claims 1 and 2, characterised in that the input device (11) of the sensor is directly connected to a discharge electrode (4) arranged so as to generate ions in the vicinity of the spike (1) as soon as it is fed at high voltage.

## Patentansprüche

1. Blitzschutzeinrichtung umfassend eine metallische Spitze (1), die vertikal ausgerichtet und mit der Erde verbunden ist, und Mittel (4), um in unmittelbarer Nähe der Spitze eine Emission von Ionen (5) herbeizuführen, **dadurch gekennzeichnet,** daß die Blitzschutzeinrichtung eine Sonde (6,7) umfaßt, die zur Erfassung von von Blitzvorläufern (9) emittierten elektromagnetischen Wellen (10) mit einer Frequenz oberhalb von 100 kHz und zur Umwandlung dieser Wellen in die zur Ionenemission erforderliche Hochspannung ausgebildet ist.

2. Schutzeinrichtung nach Anspruch 1, **dadurch gekennzeichnet,** daß die Sonde (6,7) als Eingangsvorrichtung (11) eine Spule mit wenigstens 50 Windungen aufweist, welche Windungen um ein Kern mit einer magnetischen Permeabilität von mehr als 500 gewickelt sind.

3. Schutzeinrichtung nach Anspruch 2, **dadurch gekennzeichnet,** daß die Sonde aufeinanderfolgend nach ihrer Eingangsvorrichtung (11) einen Kondensator (13), der zu dieser Vorrichtung parallelgeschaltet ist, so daß er von deren Ausgang über einen Gleichrichter (12) geladen wird, einen Komparator (14), der derart ausgebildet ist, daß er eine Gleichspannung (U) liefert, wenn die an den Anschlußklemmen des Kondensators (13) aufgebaute Spannung (V) einen vorbestimmten Schwellenwert (V_{S}) übersteigt, einen auf die Gleichspannung(U) ansprechenden Oszillator (16), einen durch den Ausgang des Oszillators erregten und zur Primärseite (18) eines Autotransformators in Reihe angeordneten, elektronischen Unterbrecher (17) und eine zur Sekundärseite (19) des Autotransformators in Reihe angeordnete Entladungselektrode (4) umfaßt, wobei die Entladungselektrode derart ausgebildet ist, daß sie in der Umgebung der Spitze (1) Ionen erzeugt, wenn sie mit Hochspannung versorgt wird.

4. Schutzeinrichtung nach Anspruch 3, **dadurch gekennzeichnet,** daß der Oszillator (16) mit der an den Anschlußklemmen des Kondensators (13) aufgebauten Spannung (V) versorgt wird.

5. Schutzeinrichtung nach einem der Ansprüche 1 und 2, **dadurch gekennzeichnet,** daß die Eingangsvorrichtung (11) der Sonde unmittelbar an eine Entladungselektrode (4) angeschlossen ist, die derart ausgebildet ist, daß sie in der Umgebung der Spitze (1) Ionen erzeugt, wenn sie mit Hochspannung versorgt wird.
